# Europäisches Patentamt

(19) **European Patent Office**

**Office européen des brevets**

(11) Publication number: **0 100 327**
**B1**

(12) **EUROPEAN PATENT SPECIFICATION**

(51) Int. Cl.⁴: **A 61 C 17/04,** B 01 D 35/02, G 03 C 11/24

(45) Date of publication of the patent specification:
**21.08.85**

(21) Application number: **83900418.1**

(22) Date of filing: **31.01.83**

(86) International application number:
**PCT/DK 83/00011**

(87) International publication number:
**WO 83/02720 (18.08.83 Gazette 83/19)**

---

(54) **A DEVICE FOR SEPARATING WASTE PRODUCTS FROM A FLOW OF LIQUID AND GAS.**

---

(30) Priority: **05.02.82 DK 505/82**

(43) Date of publication of application:
**15.02.84 Bulletin 84/7**

(45) Publication of the grant of the patent:
**21.08.85 Bulletin 85/34**

(84) Designated Contracting States:
**BE FR**

(56) References cited:
**DE - A - 2 934 915**
**DE - B - 2 459 881**
**GB - A - 1 299 677**
**SE - B - 333 249**
**US - A - 2 997 180**
**US - A - 3 482 313**

(73) Proprietor: **HORN-LASSEN, Hans, 12D Klampenborgvej,**
**DK-2930 Klampenborg (DK)**

(72) Inventor: **BUCHHORN, Aksel Johan, 2A Laerkevej,**
**DK-4300 Holbaek (DK)**

(74) Representative: **CABINET BONNET-THIRION,**
**95 Boulevard Beaumarchais, F-75003 Paris (FR)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

BUNDESDRUCKEREI BERLIN

# Description

The invention relates to an apparatus for separation of waste products from a flow of liquid and gas, e. g. at dental clinics or photographic establishments, and of the kind which has a thank the inner space of which is connected at its upper end to at least one inlet connection for sucked-in liquid and gas, and to an outlet connection for evacuated gas, while the lower end of the space is connected to a discharge connection for liquid.

Because of the ever growing efforts to avoid pollution of the environment, there is a great need for a simple way of trapping toxic and/or costly waste products carried along in a flow of liquid and gas such as is the case et e. g. dental clinics where liquid and gas are sucked from a rinse basin and/or a mouth suction device into a fixed separation tank, or in some cases into a detachable collecting tank from which the liquid is carried on to a drain after waste products have been separated by sedimentation.

However, cleaning of the apparatuses and collection and dispatch of the waste products are unpleasant and risky work, and endeavours have, therefore, been made to show many different solutions to the related problems.

From the description of DK-C-138,927 a dental apparatus of the said kind is known which, for the purpose of facilitating cleaning work, has a removable liquid collecting tank. Furthermore, the apparatus has a removable sieve for detention of solids in the liquid sucked from the patient's mouth, and this sieve can also be removed and cleaned.

Cleaning of this apparatus as well as of the other known apparatuses where the discharge line is connected to a separation tank is, however, still rather unpleasant work which may involve a certain risk of infection. Besides, these known apparatuses are not built up so that they can be arranged in a simple and cheap way for removal of the waste products encountered in every single case and for cleaning of the waste water to the exact extent required in the actual case.

It can be mentioned that apparatuses are also known in which air, liquid, and waste products are sucked through a cyclone where air and liquid are separated whereafter solids in the liquid are deposited in a disposable tank which can be removed and closed with a lid. It is, however, impossible by the use of a cyclone to obtain effective separation of the smallest waste particles, including finely ground amalgam, e. g. sludge from drilling of teeth, and the method is relatively expensive. Furthermore, it is rather difficult to clean the cyclone, and the apparatus is unsuitable in connection with ejector suction devices and rinse fountains of old types.

It is the object of the present invention to show an apparatus of the said kind which, even if it is of a simple design, renders the unpleasant cleaning of separation tanks now required superfluous and which can give a more effective and safe separation and collection of waste products than corresponding known apparatuses, and an apparatus with a great flexibility as regards degree of cleaning and the kind of waste products.

The apparatus according to the invention is characteristic in that the inlet connection, the outlet connection, and the discharge connection for liquid are placed on a common head which has devices for tight-fitting connection with the mouth rim of the tank wall, and in that the interior of a filter cartridge placed in the lower part of the tank space is connected to the discharge connection for liquid through a suction tube.

In such an apparatus the polluting substances can be removed effectively in the tank, i. e. as close to the pollution source as possible, which is an obvious advantage. Among other things, cleaning of the air line system from suction device to separation tank is made superfluous, and gradual reduction of the air suction capacity is thus also avoided. The tank with collected waste products can easily be designed so that it can be removed from the head, sealed, and sent to a regeneration or destruction plant without inconvenience to the personnel. The filter cartridge employed can be adapted to the kind of waste particles and to the degree of cleaning required, and the same applies to a sieve or filter cartridge which can easily be places in front of the outlet connection where the gas flows away from the tank. This flexibility has the effect that not only is the apparatus suitable for use at dental clinics, but also in other enterprises and for separation of many different substances such as amalgam, mercury, and particles or chips of e. g. silver and gold as well as fine-grained sludge from grinding and drilling processes of many kinds.

A very effective separation between cleaned air, cleaned liquid, and impurities can also according to the invention be obtained by the tank containing an interchangeable sieve placed between the mouth of the head inlet connection for liquid and gas and the outlet connection for gas and which extends towards the tank bottom.

The air is cleaned effectively of impurities, partly during passage through the sieve and partly by the strong deflection of the air flow between the inlet connection and the outlet connection, and the liquid is cleaned effectively both by sedimentation and by filtration through the filter cartridge, whose fraction is not disturbed by air carried along in the liquid.

The screen can, according to the invention, be a tube which is open at both ends and placed under the suction connection. Hence the pressure drop through the sieve is reduced, and it is subjected to a certain selfcleaning effect.

However, the sieve can also, according to the invention, be a bag under the inlet connection so that additional filtration is obtained.

Even if a tubular or a bag-shaped sieve is prefered, the tank may, however, also be designed with a sieve wall extending from the head and towards the bottom and separating the inlet connection for liquid and gas from the outlet connection to the vacuum source. It will thus be seen that there are many possible ways of varying the degree of cleaning of both liquid and gas. The tank can in a known way be equipped with level control devices which, e. g. by the use of electrodes, start liquid suction through the discharge connection when the liquid in the tank has reached a certain level. Alternatively, liquid suction can be controlled electrically in connection with the control system for the air suction motor of with a manually operated electric switch.

The necessary seals can easily be provided by O-rings or in a similar way, and the tank can be fixed to the circumference of an axial flange on the head by means of a snap lock mechanism or a threaded section.

According to a preferred Feature of the invention, the tank can form an interchangeable disposable tank which immediately under the head has a cover with openings which are flush with the openings in the head connections, since the discharge connection for liquid is arranged as a tight-fitting releasable connection to the suction tube from the filter cartridge passing through the cover. Such a tank can, without risk of pollution and infection owing to spillage, be removed easily from the permanent head at a dentist's chair.

Normally, it will, however, suffice to use a tank open at the top, since the tank is only open during replacement, and replacement of filter cartridge and sieves will in some cases not be necessary whenever the tank is replaced. Besides, it has appeared that the toxins introduced in the tank during ordinary dental treatment kill bacteria to such an extent that even after lengthy standing the contents of the tank will emit no obnoxious smell which may render replacement work unpleasant.

The invention is explained in greater detail in the following in connection with the drawing where

Fig. 1 shows an axial section through a first embodiment of the tank according to the invention, and

Fig. 2 shows an axial section through another embodiment of the tank according to the invention.

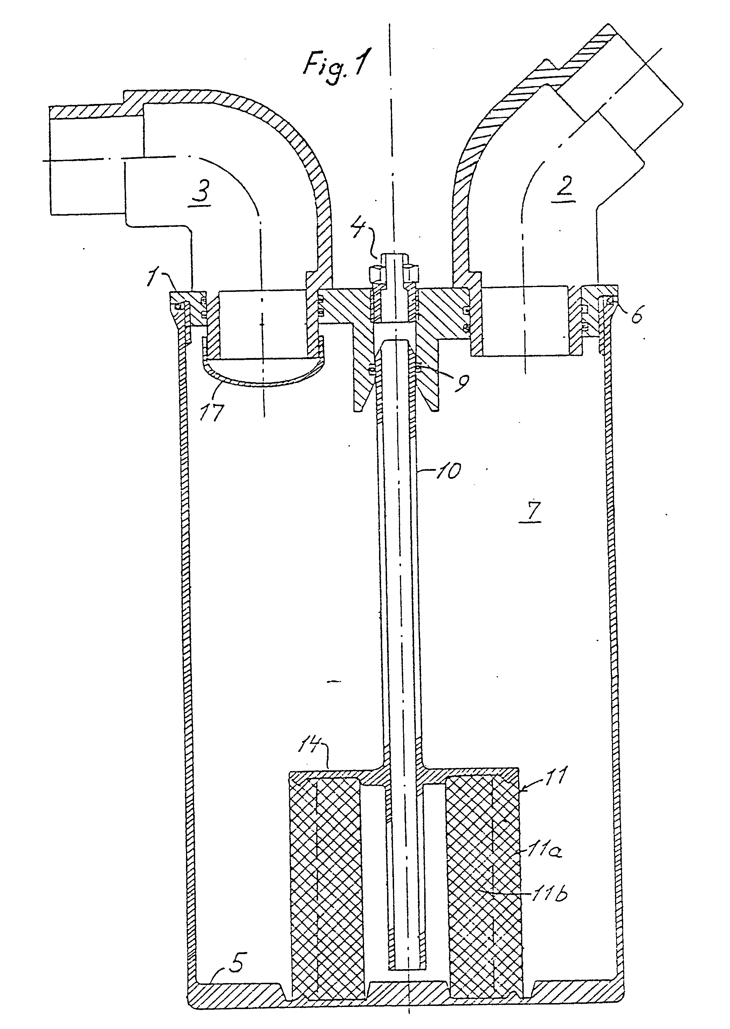

Fig. 1 shows a preferred simple embodiment of the apparatus according to the invention. The apparatus shown has a head 1 which can be fixed to or at a dentist's chair and which has through-going bores with appertaining connections, viz. one or more inlet connections 2 which via hose connections can be connected to a rinse basin and a mouth suction device, an outlet connection 3 which can be connected to a vacuum source, and a discharge connection 4 which can be connected to an injector or suction pump for suction of filtered water to a sewer or possibly to a collecting tank. The connection 2 can be equiped with branch connections for connection to rinse basin and mouth suction device respectively, or either of these sources of pollution can be connected to a separate connection 2 in the head.

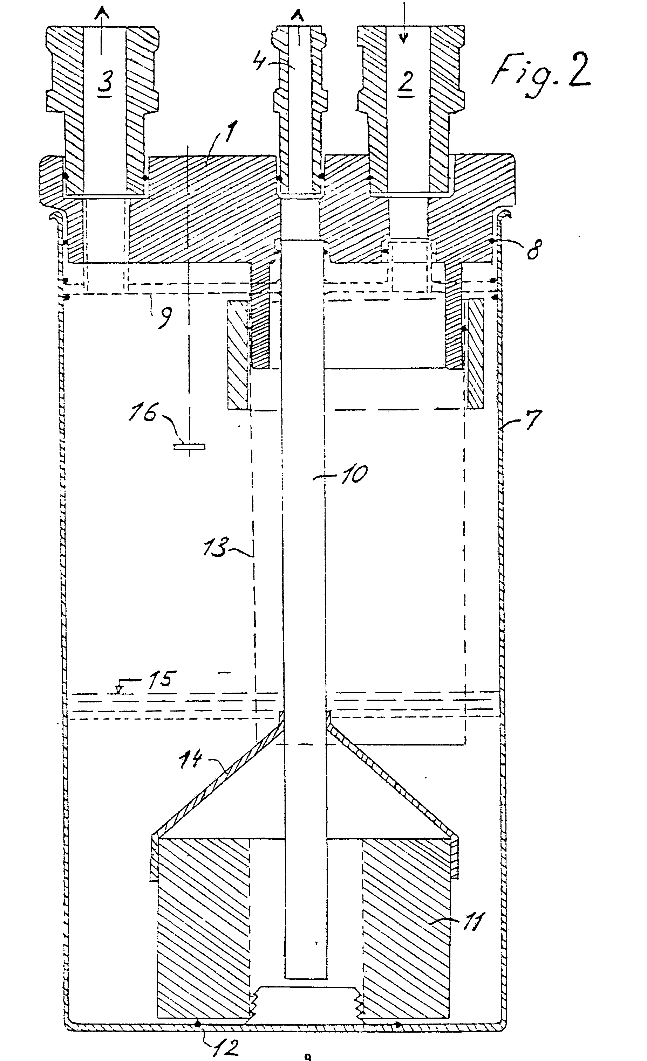

A tank 7 with a closed bottom 5 has a gasket 6 in its mouth rim facing upwards, by means of which gasket it closes tightly against the head 1 to which it is fixed, for example, by a threaded section or a snap lock 8 (Fig. 2) or in another suitable way. For example, the tank can be a cup of elastic material with a rim which can be snapped over a bead on an axial flange of the head 1.

The upper end of a suction tube 10 is fixed to the head under the discharge connection 4 by means of a seal ring 9, and this tube almost reaches the tank bottom where it is surrounded by a filter cartridge 11 which is in close contact with the tank bottom 5. For example, the filter cartridge 11 can be glued to the bottom or fixed to it in some other suitable way as indicated in Fig. 2. Tightness can also be obtained with an O-ring 12. The filter cartridge is tightly connected to the suction pipe 10 through a jacket 14.

However, the filter cartridge can also simply be closed at the bottom, or it can be ensured in some other way that there is only connection between the outer and inner sides of the cartridge through the filter element. The liquid which flows from the inlet connection 2 to the bottom of the tank, and which from the discharge connection 4 is sucked up through the tube 10, can be cleaned more or less depending on the pores the filter cartridge 11. As indicated in Fig. 1, it can be divided into a coarse filter 11a and an inner filter 11b with finer pores so that clogging up of the filter is delayed which is important since a filter cartridge with a pore size sufficient for obtainment of the filtration fineness yielded by the apparatus according to the invention, is clogged up on the surface very soon unless, like in an embodiment according to the invention, it is surrounded by a cartridge with a larger pore size which provides a certain volume for absorption of the large particles, which thus delay clogging up of the inner cartridge.

The air which enters through connection 2 and is sucked off through connection 3, is cleaned of impurities by the strong deflection in the tank and, if desired, by passage of a sieve 17 or a filter placed under the outlet connection 3. The mesh size of this sieve, or the filter, can also be varied with due regard to the kind of waste products and the degree of cleaning required.

The embodiment of the apparatus according to the invention shown in Fig. 2 differs from the embodiment described above by a suspended tubular sieve being mounted in close connection with the lower side of the head 1, which sieve can detain waste products from the liquid-gas mixture entering through inlet connection 2.

To prepare the apparatus for operation, the tank 7 is placed under the stationary head 1 whose connections are connected permanently to a rinse basin, a vacuum suction source, and an injector or suction pump respectively.

During its use, air, mucus, water, and impurities are sucked in through the inlet connection 2. Impurities are separated off in the sieve 13 and/or by the strong change in the air direction, before it flows to the suction source through connection 3 while the liquid flows to the bottom of the tank, and waste products such as amalgam waste are filtered off by the filter cartridge 11 before the liquid is drawn up through suction tube 10.

By means of an electrode 16 or a corresponding detection device such as a probe extending into the tank, or by electric control in connection with the air suction motor, it is ensured that the liquid in the tank 7 does not rise above a prefixed level 15 since the liquid suction through the discharge connection 4 is started when the liquid surface has risen to this level. The tank filled with waste is separated from the lid 1 by the snap lock mechanism 8 and is closed with an appertaining tight-fitting lid and sent to a plant where its contents are destroyed and/or recovered. It will be understood that the apparatus with head 1 and filter cartridge 11 and a sieve 17, 13 if any, and an appertaining tank 7 can be made at a relatively low price and can work without replacement for a prolonged period. Furthermore, the apparatus according to the invention is suitable for use in connection with most existing suction apparatuses at dental clinics.

The apparatus according to the invention can be made in many other ways than the one described in the foregoing. For example, as shown in dotted lines in Fig. 2, a fixed tight-fitting cover 9 with openings flush with the bores of the head 1 for connections 2, 3, 4 can be placed at the top of the collecting tank 7. In that case the screen 13 and possible also the suction tube 10 can be fixed to the cover 9 so that they are removed together with the collecting tank.

However, the tank can also be designed with a removable cover 9 and an interchangeable filter 13 placed on it. In either of the embodiments shown the filter cartridge 11 and the jacket 14 can be arranged for replacement on the suction tube 10.

It can be seen that the invention has produced a cleaning-convenient apparatus of a simple design and usable for safe collection of waste products of many different kinds, including especially the very smallest particles in the waste which it has hitherto been impossible to detain to the same degree. It is thus assumed that at least 98% of liquid-suspended particles of the size 0.3 μ or larger can be caught in the filter cartridge 11, and that 99.95% of particles in the suction air of a size larger than 0.2 μ can be detained in a corresponding filter cartridge 17 in front of the outlet connection 3. The apparatus can easily be arranged individually for the degree of cleaning wanted or required in every single case.

## Claims

1. An apparatus for separation of waste products from a flow of liquid and gas e. g. at dental clinics or photographic establishments, and comprising a tank (7), the inner space of which is connected at its upper end to at least one inlet connection (2) for suckedin liquid and gas, and an outlet connection (3) for evacuated gas, while the lower end of the space is connected to a discharge connection for liquid, characterized in that the inlet connection (2), the outlet connection (3), and the discharge connection (4) for liquid are placed on a common head (1) which has devices (8) for tight-fitting connection with the mouth rim of the tank wall, and in that the interior of a filter cartridge (11) placed in the lower part of the tank space is connected via a suction tube (10) to the discharge connection (4) for liquid.

2. An apparatus as claimed in claim 1, characterized in that a filter sieve (17) or a filter cartridge is placed under the outlet connection (3) for gas.

3. An apparatus as claimed in claim 1 or 2, characterized in that the filter cartridge (11) is tubular and that the outer part of the tube wall forms a coarse filter (11a) while the inner part of the wall consists of a material (11b) with finer pores.

4. An apparatus as claimed in any of the preceding claims, characterized in that the tank (7) contains an interchangeable sieve (13) placed between the mouth of the inlet connection (2) for liquid and gas and the outlet connection (3) for gas and which extends towards the bottom of the tank (7).

5. An apparatus as claimed in claim 4, characterized in that the sieve (13) is a tube which is open at both ends and placed under the inlet connection (2).

6. An apparatus as claimed in claim 4, characterized in that the sieve (13) is a bag under the inlet connection (2).

7. An apparatus as claimed in any of the preceding claims, characterized in that the tank (7) is fixed to the circumference of an axial flange on the head (1) by the use of a snap lock mechanism (8) or a threaded section.

8. An apparatus as claimed in any of the preceding claims, characterized in that the filter cartridge (11) is interchangeable on the suction tube (10).

9. An apparatus as claimed in any of the preceding claims, characterized in that the suction tube (10) is releasably connected to the head (1).

10. An apparatus as claimed in any of the preceding claims, characterized in that the tank (7) forms an interchangeable disposable tank which immediately under the head (1) has a cover (9) with opening flush with the openings in the connections (2, 3, 4) on the head and that the discharge connection (4) for liquid is arranged for a tight-fitting releasable connection with the suction tube (10) passing through the cover from the filter cartridge (11).

**Patentansprüche**

1. Vorrichtung zum Abtrennen von Abfallprodukten aus einem Flüssigkeits-Gas-Strom, z. B. in Dentalkliniken oder Fotolabors, mit einem Behälter (7), dessen Innenraum am Oberende mit wenigstens einem Einlaßanschluß (2) für angesaugte Flüssigkeit und angesaugtes Gas und einem Auslaßanschluß (3) für evakuiertes Gas verbunden ist, während das Unterende des Innenraums mit einem Abwasseranschluß für Flüssigkeit verbunden ist, dadurch gekennzeichnet, daß der Einlaßanschluß (2), der Auslaßanschluß (3) und der Abwasseranschluß (4) für Flüssigkeit an einem gemeinsamen Verteilerkopf (1), der Elemente (8) zum dichtpassenden Anschluß an den Mündungsrand der Behälterwandung aufweist, angeordnet sind, und daß das Innere einer Filterpatrone (11), die im unteren Teil des Behälterinnenraums angeordnet ist, über ein Saugrohr (10) mit dem Abwasseranschluß (4) für Flüssigkeit verbunden ist.

2. Vorrichtung nach Anspruch 1, dadurch gekennzeichnet, daß ein Filtersieb (17) oder eine Filterpatrone unter dem Auslaßanschluß (3) für Gas angeordnet ist.

3. Vorrichtung nach jedem der Ansprüche 1 bis 2, dadurch gekennzeichnet, daß die Filterpatrone (11) rohrförmig ist und daß der äußerste Teil der Rohrwandung ein Grobfilter (11a) bildet, während der Innenteil der Wandung aus einem feinerporigen Werkstoff (11b) besteht.

4. Vorrichtung nach jedem der vorhergehenden Ansprüche, dadurch gekennzeichnet, daß der Behälter (7) ein austauschbares Sieb (13) enthält, das zwischen der Mündung des Einlaßanschlusses (2) für Flüssigkeit und Gas und dem Auslaßanschluß (3) für Gas angeordnet ist und sich zum Boden des Behälters (7) erstreckt.

5. Vorrichtung nach Anspruch 4, dadurch gekennzeichnet, daß das Sieb (13) ein beidendig offenes Rohr ist, das unter dem Einlaßanschluß (2) angeordnet ist.

6. Vorrichtung nach Anspruch 4, dadurch gekennzeichnet, daß das Sieb (13) ein Sack unter dem Einlaßanschluß (2) ist.

7. Vorrichtung nach jedem der vorhergehenden Ansprüche, dadurch gekennzeichnet, daß der Behälter (7) am Umfang eines axialen Flanschs an dem Verteilerkopf (1) durch Verwendung einer Schnappverriegelung (8) oder eines Gewindeabschnitts festgelegt ist.

8. Vorrichtung nach jedem der vorhergehenden Ansprüche, dadurch gekennzeichnet, daß die Filterpatrone (11) auf dem Saugrohr (10) austauschbar ist.

9. Vorrichtung nach jedem der vorhergehenden Ansprüche, dadurch gekennzeichnet, daß das Saugrohr (10) lösbar mit dem Verteilerkopf (1) verbunden ist.

10. Vorrichtung nach jedem der vorhergehenden Ansprüche, dadurch gekennzeichnet, daß der Behälter (7) einen austauschbaren, entfernbaren Behälter bildet, der unmittelbar unter dem Verteilerkopf (1) eine Abdeckung (9) mit Öffnungen, die mit den Öffnungen in den Anschlüssen (2, 3, 4) des Verteilerkopfs fluchten, aufweist, und daß der Abwasseranschluß (4) für Flüssigkeit zum dichtpassenden lösbaren Anschluß an das Saugrohr (10), das von der Filterpatrone (11) ausgehend die Abdeckung durchsetzt, ausgebildet ist.

**Revendications**

1. Un appareil pour séparer les déchets d'un flux de liquide et de gaz, par exemple dans les cliniques dentaires ou les établissements photographiques, et comportant un réservoir (7) dont l'espace intérieur est connecté à son extrémité supérieure à au moins un raccord d'admission (2) pour le liquide et le gaz aspirés, et un raccord d'échappement (3) pour le gaz évacué, tandis que l'extrémité inférieure de l'espace est reliée à un raccord de décharge du liquide, caractérisé en ce que le raccord d'admission (2), le raccord d'échappement (3), et le raccord de décharge (4) du liquide, sont placés en une tête commune (1) qui comporte des moyens (8) de raccordement étanche avec l'embouchure de la paroi du réservoir, et en ce que l'intérieur d'une cartouche de filtre (11) placée dans la partie inférieure de l'espace du réservoir est relié par l'intermédiaire d'un tube de succion (10) au raccord de décharge (4) du liquide.

2. Un appareil selon la revendication 1, caractérisé en ce qu'un tamis de filtre (17) ou une cartouche de filtre est placé sous le raccord d'échappement (3) des gaz.

3. Un appareil selon les revendications 1 ou 2, caractérisé en ce que la cartouche de filtre (11) est tubulaire, et en ce que la partie externe de la paroi tubulaire forme un filtre grossier (11a) tandis la partie intérieure de la paroi est constituée d'un matérieu (11b) à pores plus fins.

4. Un appareil selon l'une quelconque des revendications précédentes, caractérisé en ce que le réservoir (7) contient un tamis (13) interchangeable, placé entre l'arrivée du raccord d'admission (2) pour le liquide et le gaz et le raccord d'échappement (3) pour le gaz et qui s'étend vers le fond du réservoir (7).

5. Un appareil selon la revendication 4, caractérisé en ce que le tamis (13) est un tube qui est ouvert à ses deux extrémités, et est placé sous le raccord d'admission (2).

6. Un appareil selon la revendication 4, caractérisé en ce que le tamis (13) est un sac placé sous le raccord d'admission (2).

7. Un appareil selon l'une quelconque des revendications précédentes, caractérisé en ce que le réservoir (7) est fixé à la circonférence d'un collet axial sur la tête (1) par l'intermédiaire d'un mécanisme d'encliquetage (8) ou d'une partie filetée.

8. Un appareil selon l'une quelconque des revendications précédentes, caractérisé en ce que la cartouche de filtre (11) est interchangeable sur le tube de succion (10).

9. Un appareil selon l'une quelconque des revendications précédentes, caractérisé en ce que le tube de succion (10) est raccordé de façon détachable à la tête (1).

10. Un appareil selon l'une quelconque des revendications précédentes, caractérisé en ce que le réservoir (7) forme un réservoir interchangeable, qui immédiatement sous la tête (1) a un couvercle (9) avec des ouvertures alignées sur les ouvertures des raccords (2, 3, 4) de la tête et en ce que le raccord de décharge (4) pour le liquide est agencé en vue d'un raccordement étanche libérable avec le tube de succion (10) qui traverse le couvercle (9) en provenance de la cartouche de filtre (11).

Fig.1

0 100 327

7

Fig.2